# EUROPEAN PATENT SPECIFICATION

(11) **EP 2 042 575 B1**
(45) Date of publication and mention of the grant of the patent: **04.09.2013**
(21) Application number: 07790807.7
(22) Date of filing: 13.07.2007
(51) Int. Cl.: C09D 175/04, C09D 5/02, C09D 7/12, C09D 133/06, C09D 201/00, C08G 18/28, C08G 18/48

(54) **AQUEOUS COATING COMPOSITION**
WÄSSRIGE BESCHICHTUNGSZUSAMMENSETZUNG
COMPOSITION DE REVÊTEMENT AQUEUSE

(30) Priority: 18.07.2006 JP 2006195569
(43) Date of publication of application: 01.04.2009
(73) Proprietor: Adeka Corporation, Tokyo 116-8554 (JP)
(72) Inventor: MIZUTARI, Takeaki, Arakawa-ku Tokyo 116-8554 (JP); HONMA, Masatoshi, Arakawa-ku Tokyo 116-8554 (JP)
(74) Representative: HOFFMANN EITLE
(86) International application number: PCT/JP2007/064027
(87) International publication number: WO 2008/010466

(56) References cited:
- JP-A- 2000 239 649
- JP-A- 2000 303 056
- JP-A- 2003 113 342
- JP-A- 2004 525 995
- JP-A- 2005 232 457
- US-A- 4 079 028
- US-A1- 2002 077 410

## Description

### Technical Field

The present invention relates to an aqueous coating composition to be coated on automobile bodies and the like, and particularly, to an aqueous coating composition having a viscosity suitable for spray coating and excellent design properties of a coated film obtained by a metallic coat.

### Background Art

Conventionally, a solvent coating containing an organic solvent as a diluting solvent has been mainly used for coating automobile bodies and the like. However, owing to environmental problems and the like in recent years, there have been demands to reduce the solvent amount and shift to an aqueous coating. In automobile coating, while prime coating (electrodeposition paints) had completely switched to aqueous coatings, solvent coating predominates in intermediate coating and finish coating. In particular, because the base coat contains a large amount of organic solvents, the shift of the base coat to an aqueous coating is strongly desired at present.

The base coat is generally coated by an atomized coat (spray). In order to improve finished properties (sagging, unevenness, metallic feeling, and the like), it is necessary to form the coating into fine particles and prevent sagging. In view of the foregoing, a so-called thixotropic property where the viscosity cofficient decreases at high shear force is needed for the viscosity of the coating.
As viscosity-adjusting agents for imparting a thixotropic property to the aqueous coating, viscosity-adjusting agents of cellulose derivatives and the like are exemplified (for example, see Patent Document 1). However, aqueous coatings to which a viscosity-adjusting agent of a cellulose derivative was added had problems in that sufficient water resistance could not be obtained when a film was formed.

In addition, as viscosity-adjusting agents having favorable water resistance and being capable of imparting thixotropic property to the aqueous coating, urethane-based viscosity-adjusting agents are known (for example, see Patent Document 2). However, when used in a aqueous coatings containing an acrylic emulsion, those viscosity-adjusting agents were short of thixotropic property in some cases, so there was a problem that coated films had a defect in design property.

Patent Document 1: Japanese Patent Laid-open No.9-323062
Patent Document 2: Japanese Patent Laid-open No.2003-113342 Urethane-based viscosity-adjusting agents are also disclosed in JP-A-2000-239 649.

### Disclosure of the Invention

### Problems to be solved by the Invention

Accordingly, a problem to be solved by the present invention is to provide an aqueous coating composition having excellent thixotropic property, which contributes to obtaining a coating having favorable water resistance and a coated film having favorable design properties.

### Means for solving the Problems

The inventors of the present invention extensively studied to find an aqueous coating composition which contributes to obtain a coating having favorable water resistance and a coated film having favorable design properties, thereby achieving the present invention. That is, the present invention provides an aqueous coating composition comprising: a urethane compound as component (A) represented by the following general formula (1);

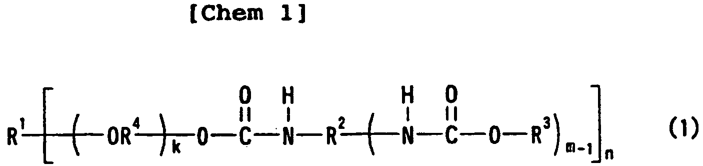

where: R¹ represents a residue obtained by removing hydroxy groups from an n-valent alcohol having 2 to 20 carbon atoms; R² represents a hydrocarbon group which may have a urethane bond; R³ represents an alkyl group having 8 to 30 carbon atoms; R⁴ represents an alkylene group having 2 to 3 carbon atoms; k represents an integer of 1 to 500; and n and m each represent an integer of 2 to 10;
a flake pigment as component (B); and a water-soluble resin other than component (A) as component (C).

### Effects of the Invention

The effects of the present invention are that the present invention provides an aqueous coating composition having excellent thixotropic property, which contributes to obtaining a coating having favorable water resistance and a coated film having favorable design properties.

### Best Mode for carrying out the Invention

The urethane compound as component (A) in the present invention, the compound being represented by the general formula (1), can be obtained, for example, by reacting a polyether polyol compound represented by R¹-( (OR⁴)ₖ)ₙ-OH, a polyisocyanate compound represented by R²-(NCO)ₘ, and 1-valent hydroxy compound represented by R³-OH.

The polyether polyol compound represented by R¹-( (OR⁴)ₖ)ₙ-OH can be obtained by reaction of the polyol compound represented by R¹- (OH)ₙ with ethylene oxides and/or propylene oxides. As the polyol compound represented by R¹-(OH)ₙ, 2- to 10-valent alcohols (in the formula, n represents an integer of 2 to 10) are generally used, 2- to 8-valent alcohols (in the formula, n represents an integer of 2 to 8) are preferably used, and 2- or 3-valent alcohols (in the formula, n represents an integer of 2 or 3) are more preferably used. 1-valent alcohols are inferior in an effect of changing the viscosity to a thixotropic one. Alcohols with a valence of 10 or more are polymers having such high molecular weight that the viscosity coefficient of the compound represented by the general formula (1) increases, whereby production of the compound sometimes becomes difficult.

Examples of the 2-valent alcohols include ethylene glycol, propylene glycol, 1,4-butanediol, 1,2-butanediol, neopentyl glycol, 1,6-hexanediol, 1,2-octanediol, and hydrogenated bisphenol A.

Examples of the 3-valent alcohols include glycerin, trioxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerin, pentaglycerin, 1,2,4-butanetriol, 1,2,4-pentanetriol, trimethylolethane, and trimethylolpropane.

Examples of the 4-valent alcohols include pentaerythritol, 1,2,3,4-pentanetetrol, 2,3,4,5-hexanetetrol, 1,2,4,5-pentanetetrol, 1,3,4,5-hexanetetrol, diglycerin, and sorbitan.

Examples of the 5-valnent alcohols include adonitol, arabitol, xylitol, and triglycerin. Examples of the 6-valent alcohols include dipentaerythritol, sorbitol, mannitol, iditole, inositol, darcitol, talose, and allose. Examples of the 8-valent alcohols include sucrose. Examples of other alcohols of 3-valent or more include polyglycerine.

Of those, industrially easily available polyols such as ethylene glycol, propylene glycol, 1,4-butanediol, 1,2-butanediol, neopentyl glycol, 1,6-hexanediol, 1,2-octanediol, solbite, (poly)glycerin, trimethylolethane, trimethylolpropane, pentaerythritol, sorbitan, dipentaerythritol, and sorbitol are preferred and ethylene glycol, propylene glycol, 1,4-butanediol, 1,2-butanediol, and the like are still more preferred.

In addition, R¹ is not particularly limited as long as it can be a residue of the polyol compound represented by R¹-(OH)ₙ, but is preferably a hydrocarbon group. In this case, the number of carbon atoms is generally 2 to 18, preferably 2 to 12, and more preferably 2 to 8.

The polyether polyol compound represented by R¹-((OR⁴)ₖ)ₙ-OH can be obtained by addition polymerization reaction of the polyol compound and ethylene oxides and/or propylene oxides. The ethylene oxides and/or propylene oxides may be polymerized by any one of a homopolymerization, random polymerization of two kinds, and block polymerization or random/block copolymerization of two kinds. In addition, the k being a degree of the polymerization represents an integer of 1 to 500, preferably 10 to 400, and more preferably 30 to 350. In addition, the ratio at which ethylene groups account for k of R⁴ is preferably 50 to 100 mass%, more preferably 65 to 100 mass%, still more preferably 80 to 100 mass%, and most preferably 100 mass% of total _{R}⁴.

Specific examples of the polyether polyol compound represented by R¹-((OR⁴)ₖ)ₙ-OH include polyethylene glycol obtained by polymerizing ethylene glycols with ethylene oxides, a substance obtained by adding ethylene glycols to glycerins, and pluronic type surfactants.

The polyisocyanate compound represented by R²-(NCO)ₘ is not particularly limited as long as it contains two or more isocyanate groups in the molecular (in the formula, m represents 2 or more). In the formula, R² represents a hydrocarbon group or a hydrocarbon group containing a urethane bond and R² represents preferably a hydrocarbon group having 1 to 30 carbon atoms. Preferable examples of polyisocyanate compounds include aliphatic diisocyanates, aromatic diisocyanates, alicyclic diisocyanates, biphenyl diisocyanates, phenylmethane diisocyanates, and triisocyanates.

Examples of the aliphatic diisocyanates include methylene diisocyanate, dimethylene diisocyanate, trimethylene diisocyanate, tetramethylene diisocyanate, pentamethylene diisocyanate, hexamethylene diisocyanate, dipropylether diisocyanate, 2,2-dimethylpentane diisocyanate, 3-methoxyhexane diisocyanate, octamethylene diisocyanate, 2,2,4-trimethylpentane diisocyanate, nonamethylene diisocyanate, decamethylene diisocyanate, 3-butoxyhexane diisocyanate, 1,4-butylene glycol dipropylether diisocyanate, thiodihexyl diisocyanate, metaxylylene diisocyanate, paraxylylene diisocyanate, and tetramethylxylylene diisocyanate.

Examples of the aromatic diisocyanates include metaphenylene diisocyanate, paraphenylene diisocyanate, 2,4-tolylene diisocyanate, 2,6-tolylene diisocyanate, dimethylbenzene diisocyanate, ethylbenzene diisocyanate, isopropylbenzene diisocyanate, tolidine diisocyanate, 1,4-naphthalene diisocyanate, 1,5-naphthalene diisocyanate, 2,6-naphthalene diisocyanate, and 2,7-naphthalene diisocyanate.
Examples of the alicyclic diisocyanates include hydrogenated xylylene diisocyanate, isophorone diisocyanate, and dicyclohexylmethane diisocyanate.

Examples of the biphenyl diisocyanates include biphenyl diisocyanate, 3,3'-dimethylbiphenyl diisocyanate, and 3,3'-dimethoxybiphenyl diisocyanate.
Examples of the phenylmethane diisocyanates include diphenylmethane-4,4'-diisocyanate, 2,2'-dimethyldiphenylmethane-4,4'-diisocyanate, diphenyldimethylmethane-4,4'-diisocyanate, 2,5,2',5'-tetramethyldiphenylmethane-4,4'-diisocyanate, cyclohexylbis(4-isocyanatephenyl)methane, 3,3'-dimethoxydiphenylmethane-4,4'-diisocyanate, 4,4'-dimethoxydiphenylmethane-3,3'-diisocyanate, 4,4'-diethoxydiphenylmethane-3,3'-diisocyanate, 2,2'-dimethyl-5,5'-dimethoxydiphenylmethane-4,4'-diisocyanate, 3,3'-dichlorodiphenyldimethylmethane-4,4'-diisocyanate, and benzophenone-3,3'-diisocyanate.

Examples of the triisocyanates include 1-methylbenzene-2,4,6-triisocyanate, 1,3,5-trimethylbenzene-2,4,6-triisocyanate, 1,3,7-naphthalene triisocyanate, biphenyl-2,4,4'-triisocyanate, diphenylmethane-2,4,4'-triisocyanate, 3-methyldiphenylmethane-4,6,4'-triisocyanate, triphenylmethane-4,4',4"-triisocyanate, 1,6,11-undecane triisocyanate, 1,8-diisocyanate-4-isocyanate methyloctane, 1,3,6-hexamethylene triisocyanate, bicycloheptane triisocyanate, and tris(isocyanatephenyl)thiophosphate.

Of those, because the viscosity of the aqueous coating composition is easily changed to thixotropic one, polyisocyanate compounds such as hexamethylene diioscyanate, 2,4-tolylene diisocyanate, 2,6-tolylene diisocyanate, xylylene diisocyanate, hydrogenerated xylylene diisocyanate, isophoron diisocyanate, diphenylmethane-4,4'-diisocyanate, and 2,2'-dimethyldiphenylmethane-4,4'-diisocyanate are preferably used.
In addition, those polyisocyanate compounds may be used in the form of dimers or trimers (isocyanurate bond).

Further, polyisocyanate having a urethane bond obtained by reaction of the polyisocyanate compound with a polyol compound or a polyether polyol compound may be used. As the polyol compound, the above-mentioned 2- to 8-valent alcohols are exemplified. As the polyether polyol compound, compounds represented by R¹-((OR⁴)ₖ)ₙ-OH are exemplified. In addition, when a polyisocyanate of 3-valent or more is used, a urethane bond-containing polyisocyanate obtained by reaction of diisocyanate with the polyol compound or the polyether polyol compound.

R³ of the 1-valent hydroxy compound represented by R³-OH is an alkyl group having 8 to 30 carbon atoms. Examples of the alkyl group include an octyl group, a 2-ethylhexyl group, a secondary octyl group, a nonyl group, a secondary nonyl group, a decyl group, a secondary decyl group, an undecyl group, a secondary undecyl group, a dodecyl group, a secondary dodecyl group, a tridecyl group, an isotridecyl group, a secondary tridecyl group, a tetradecyl group, a secondary tetradecyl group, a hexadecyl group, a secondary hexadecyl group, a stearyl group, an eicosyl group, a docosyl group, a tetracosyl group, a triacontyl group, a 2-butyloctyl group, a 2-butyldecyl group, a 2-hexyloctyl group, a 2-hexyldecyl group, a 2-octyldecyl group, a 2-hexyldodecyl group, a 2-octyldodecyl group, a 2-decyltetradecyl group, a 2-dodecylhexadecyl group, a 2-hexadecyloctadecyl group, a 2-tetradecyloctadecyl group, and a monomethyl branched-isostearyl group.

Of those alkyl groups, R³ has an average carbon atoms of preferably 14 or more, more preferably 16 or more, and still more preferably 18 or more because an effect of changing the viscosity of the aqueous coating composition to thixotropic one is high. In addition, the hydrocarbon group represented by R³ is preferably an alkyl group, and more preferably a branched chain or a secondary alkyl group.

In addition, it is not preferred to use a substance obtained by reaction of 1-valent hydroxy compound with alkylene oxide as the urethane-based compound described in Patent Document 2, because sufficient thickening properties can not be obtained and the viscosity of the obtained coating does not become sufficiently thixotropic. If sufficient viscosity coefficient or viscosity (viscosity of thixotropic property) can not be obtained, the flake pigment as component (B) may not be aligned regularly or applied coating may sag, resulting in defects in the design properties of the coated film.

A specific production method for the urethane compound represented by the general formula (1) as component (A) in the present invention is, for example, as follows: mixing a polyether polyol compound represented by R¹-((OR⁴)ₖ)ₙ-OH, a polyisocyanate compound represented by R²-(NCO)ₘ, and 1-valent hydroxy compound represented by R³-OH so that the ratio of the hydroxy value to isocyanate value of respective compounds is 1/1 to 1.5/1 and preferably 1/1 to 1.3/1; and subjecting those compounds to reaction for 1 to 3 hour(s) at 60 to 100°C and preferably 80 to 90°C. The mixing amount of the urethane compound is 0.01 to 20 parts by mass and preferably 0.02 to 10 parts by mass in terms of the solid content with respect to 100 parts by mass of the solid content of the resin contained in the aqueous coating composition of the present invention.

The flake pigment as component (B) in the present invention is a pigment for imparting a twinkle brightness and/or a light interference property to a coated film formed of the aqueous coating composition of the present invention. Examples of the flake pigment include squamous aluminum, deposited aluminum, aluminum oxide, oxybismuth chloride, copper alloys, zinc alloys, nickel alloys, tin alloys, mica, titanium oxide-coated mica, iron oxide-coatedmica, and micaceous iron oxide. Of those flake pigments, aluminum or an aluminum-containing compound is preferred and squamous aluminum is more preferred.

The squamous aluminum has preferably a major axis of about 10 to 50 µm, a minor axis of about 3 to 30 µm, and a thickness of about 0.1 to 3 µm. In addition, the mixing amount of the flake pigment is 5 to 100 parts by mass and preferably 20 to 80 parts by mass with respect to 100 parts by mass of solid content of the resin contained in the aqueous coating composition of the present invention.

As the water-soluble resin as component (C) in the present invention, preferred is an emulsion resin obtained by subjecting (meth)acrylate as a monomer in an amount of 60 mass% or more to an emulsion polymerization, or an aqueous resin in which a resin having an acid value of 10 to 100, a hydroxy value of 30 to 200, and a weight average molecular weight of 4,000 to 2,000,000 is dissolved or dispersed in an aqueous medium with a neutralizing base.

Examples of the emulsion resin having (meth)acrylate in an amount of 60 mass% or more in the raw material monomer includes methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, 2-ethylhexyl (meth)acrylate, lauryl (meth)acrylate, phenyl (meth)acrylate, isobornyl (meth)acrylate, cyclohexyl (meth)acrylate, t-butylcyclohexyl (meth)acrylate, dicyclopentadienyl (meth)acrylate, and dihydrocyclopentadienyl (meth)acrylate. Of those, methyl (meth) acrylate and ethyl (meth) acrylate are preferably used. When the (meth)acrylate is contained in the raw material monomer in an amount of less than 60 mass%, the external appearance of the coated film may be impaired.

As a monomer other than (meth)acrylate in the aqueous resin, an a,β-ethylenic unsaturated monomer having an acid value of 3 to 50 is preferably used. Examples of the a,β-ethylenic unsaturated monomer include acrylic acid, methacrylic acid, dimer of acrylic acid, crotonic acid, 2-acryloyloxyethyl phthalate, 2-acryloyloxyethyl succinate, 2-acryloyloxyethyl acid phosphate, 2-acrylamide-2-methylpropane sulfonate, ω-carboxy-polycaprolactone mono(meth)acrylate, isocrotonic acid, a-hydro-ω-[(1-oxo-2-propenyl)oxy]poly[oxy(1-oxo-1,6-hexanediyl )], maleic acid, fumaric acid, itaconic acid, 3-vinyl salicylic acid, and 3-vinyl acetyl salicylic acid.

In addition, a mixture of the a, B-ethylenic unsaturated monomer may have a hydroxy group. The hydroxy value is 10 to 150 and preferably 20 to 100. When the hydroxy value is less than 10, sufficient curability can not be obtained. When the hydroxy value exceeds 150, various properties of the coated film to be obtained are impaired. The mixture of the a,β-ethylenic unsaturated monomer includes an a,β-ethylenic unsaturated monomer having a hydroxy group. Examples of the a,β-ethylenic unsaturated monomer having a hydroxy group include hydroxyethyl (meth)acrylate, hydroxypropyl (meth)acrylate, hydroxybutyl (meth)acrylate, allyl alcohol, methacryl alcohol, an adduct of hydroxyethyl (meth)acrylate and e-caprolactone. Of those, preferred are hydroxyethyl (meth)acrylate, hydroxybutyl (meth)acrylate, and an adduct of hydroxyethyl (meth)acrylate and e-caprolactone. By further containing the curing agent described later, the aqueous coating composition containing an emulsion resin obtained from the mixture of the a, β-ethylenic unsaturated monomer can obtain high curability.

Further, examples of the aqueous resin as other preferable component (C), in which resins having an acid value of 10 to 100, a hydroxy value of 30 to 200, and a weight average molecular weight of 4,000 to 2,000,000 is dissolved or dispersed in an aqueous medium with a neutralizing base, include aqueous resins in which an acrylic resin, a polyester resin, an alkyd resin, a urethane resin, an epoxy resin, and modified resins thereof are dissolved or dispersed in water. From the viewpoint of the performance and physical properties of the coated film to be obtained, preferred are an acrylic resin, a polyester resin, and an alkyd resin as resins.

The acrylic resin is not particularly limited and can be obtained by polymerization with common methods well known by persons skilled in the art using a carboxylic group-containing ethylenic unsaturated monomer such as (meth) acrylic acid, a hydroxy group-containing ethylenic unsaturated monomer such as hydroxyehtyl (meth)acrylate, and as required, other ethylenic unsaturated monomers such as methyl (meth) acrylate and styrene as raw materials.

In addition, the polyester resin is not particularly limited, for example, the polyester resin can be obtained by condensation polymerization with common methods well known by persons skilled in the art using a polyvalent carboxylic acid component such as adipic acid or maleic anhydride, a polyvalent alcohol such as 1,6-hexanediol or neopentyl glycol, and as required, a monocarboxylic acid such as benzoic acid or t-butyl benzoate, hydroxycarboxylic acid such as hydroxybenzoic acid or hydroxypivalic acid, a monoepoxide compound such as Cardura E (manufactured by Shell Chemicals.), and lactones such as e-caprolactone and d-valerolactone as raw materials. Further, the alkyd resin can be obtained by subjecting the raw material of the polyester resin and a component of a fat and oil such as coconut oil or palm kernel oil as raw materials to condensation polymerization.

Examples of the neutralizing base include hydroxides of alkali metals, inorganic bases such as ammonia, and amines such as methyl amine, dimethyl amine, trimethyl amine, ethyl amine, diethyl amine, triethyl amine, isopropyl amine, diisopropyl amine, diethylene triamine, triethylene tetramine, monoethanol amine, diethanol amine, 2-amino-2-methyl propanol, morpholine, N-methylmorpholine, N-ethyl morpholine, piperazine, dimethylethanol amine, diethylethanol amine, and dimethyl dodecyl amine. Preferred are triethyl amine, dimethylethanol amine, and diethylethanol amine.

The aqueous resin can be obtained by dissolving or dispersing the resin in the aqueous medium containing the neutralizing base in an amount of 0.3 to 1.2 equivalents and preferably 0.5 to 1.0 equivalent with respect to the acid value of the resin. The content of the aqueous coating composition contained in the aqueous resin in the solid content of the resin is preferably 5 to 95 mass%, more preferably 10 to 85 mass%, and still more preferably 20 to 70 mass%. When the content is out of the range, there is a possibility that coating workability and the external appearance of the coated film to be obtained are impaired.

Further, the aqueous coating composition of the present invention has the effect of improving the design property of the coated film, preventing the corrosion of the flake pigment, and improving the wettability to the flake pigment and the like by containing a phosphorous atom-containing compound as component (D). Examples of the phosphorous atom-containing compound include (mono, di, tri)alkyl phosphate, (mono, di, tri)alkyl phosphite, (mono, di, tri)alkenyl phosphate, (mono, di, tri)alkenyl phosphite, (mono, di, tri)aryl phosphate, (mono, di, tri)aryl phosphite, and phosphorous atom-containing acrylic resin.

Examples of the phosphate include (mono, di, tri)hexyl phosphate, (mono, di, tri)2-ethylhexyl phosphate, (mono, di, tri)isodecyl phosphate, (mono, di, tri)lauryl phosphate, (mono, di, tri) tridecyl phosphate, (mono, di, tri) stearyl phosphate, (mono, di, tri) oleyl phosphate, (mono, di, tri) phenylphosphate, and (mono, di, tri)nonylphenyl phosphate. Examples of the phosphite include (mono, di, tri)hexyl phosphite, (mono, di, tri)2-ethylhexyl phosphite, (mono, di, tri) isodecyl phosphite, (mono, di, tri) lauryl phosphite, (mono, di, tri) tridecyl phosphite, (mono, di, tri) stearyl phosphite, (mono, di, tri)oleyl phosphite, (mono, di, tri)phenyl phosphite, and (mono, di, tri)nonylphenyl phosphite. Of those phosphates and phosphites, a phosphate or a phosphite each having 8 to 16 carbon atoms is preferred, and a phosphate or a phosphite each having 10 to 14 carbon atoms is more preferred. When the number of carbon atoms is less than 8, the wettability to the flake pigment is reduced, whereby the phosphate or the phosphite may not disperse well. When the number of carbon atoms is more than 16, the crystal of the phosphate or the phosphite may separate out in the coating.

When the aqueous coating composition of the present invention includes the above-mentioned compound, the content of the compound is preferably 0.1 to 5 mass% and more preferably 0.2 to 2 mass% with respect to the solid content of the coating resin. When the content is less than 0.1 mass%, there is a possibility that adherence is reduced. When the content exceeds 5 mass%, there is a possibility that water resistance is reduced.

The phosphorous atom-containing acrylic resin can be obtained by copolymerizing the phosphorous atom-containing monomer represented by the following general formula (2) with another ethylenic monomer:

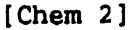

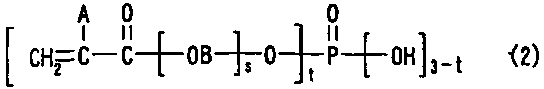

where A represents a hydrogen atom or a methyl group, B represents an alkylene group having 2 to 4 carbon atoms, s represents an integer of 1 to 30, and t represents 1 or 2.

Any ethylenic monomer can be used as the other ethylenic monomer, as long as it can copolymerize with the monomer represented by the general formula (2). The other ethylenic monomer may be a mixture of plural kinds of monomers. As the monomer, for example, the a,β-ethylenic unsaturated monomer is exemplified.

In addition, the obtained phosphorous atom-containing acrylic resin has a number average molecular weight of preferably 1,000 to 50,000. When the number average molecular weight is less than 1,000, the squamous flake pigment may not be dispersed sufficiently. When the number average molecular weight exceeds 50,000, there is a possibility that the external appearance of the coated film to be obtained becomes worse. In addition, the phosphorous atom-containing acrylic resin preferably has a solid content acid value of 15 to 200. Further, the acid value related to the phosphate groups in this acid value of the solid content is more preferably 10 to 150. When the acid value is less than 15, there is a possibility that the squamous flake pigment is not dispersed sufficiently. In addition, when the acid value exceeds 200, there is a possibility that the storage stability of the aqueous coating composition is impaired. Further, the phosphorous atom-containing acrylic resin may have a hydroxy value for securing curability, and the value is preferably 20 to 200.

The phosphorous atom-containing acrylic resin is contained in an amount of preferably 0.01 to 5 parts by mass, more preferably 0.1 to 4 parts by mass, and particularly preferably 0.2 to 3 parts by mass with respect to 100 parts by mass of the solid content of the coating resin. When the content of the phosphorous atom-containing acrylic resin is too small, various properties of the coated film may be impaired. In addition, when the content of the phosphorous atom-containing acrylic resin is too large, the storage stability of the coating may become worse.

The aqueous coating composition of the present invention may contain another coated film-forming resin, if necessary. The resin is not particularly limited, but coated film-forming resins such as an acrylic resin, a polyester resin, an alkyd resin, an epoxy resin, a urethane resin, and the like can be used.

In addition, the other coated film-forming resin has a number average molecular weight of preferably 3,000 to 50,000, and more preferably 3,000 to 30,000. When the number average molecular weight is less than 3,000, the coating workability and curability are not sufficient. When the number average molecular weight exceeds 50,000, the amount of non-volatile matter upon the coating is too small, whereby there is a possibility that coating workability is impaired.

The other coated film-forming resin has preferably an acid group, and the acid value of the solid content of the resin is preferably 10 to 100, and more preferably 20 to 80. When the acid value is less than 10, the water dispersibility of the resin is impaired. When the acid value exceeds 100, there is a possibility that various properties of the coated film to be obtained are impaired. In addition, the other coated film-forming resin has preferably a hydroxy group. The hydroxy value is preferably 10 to 180, and more preferably 20 to 160. When the hydroxy value is less than 10, there is a possibility that the curability of the coated film to be obtained is impaired. When the hydroxy value exceeds 180, there is a possibility that various properties of the coated film to be obtained are impaired.

When the aqueous coating composition of the present invention includes the other coated film-forming resin, the content of the aqueous coating composition in the solid content of the resin is preferably 5 to 95 mass%, more preferably 15 to 90 mass%, and still more preferably 30 to 80 mass%.

In addition, the aqueous coating composition of the present invention may contain curing agents. As the curing agents, those generally used in coatings are exemplified. For example, amino resins, block isocyanates, epoxy compounds, aziridine compounds, carbodiimide compounds, oxazoline compounds, and metal ions are exemplified. Amino resins and/or block isocyanates are/is preferred from the viewpoint of various properties of the coated film to be obtained and cost.

The amino resin as the curing agent is not particularly limited, and water-soluble melamine resins or water-insoluble melamine resins can be used. Further, from the viewpoint of the stability of the aqueous coating composition, among melamine resins, those having a water tolerance value of 3.0 or more are preferably used. Note that the water tolerance value is used for evaluating the hydrophilic degree. The higher the value is, the higher the hydrophilicity is. The water tolerance value is measured as follows: mixing 0.5 g of the melamine resins and 10 ml of acetone in a 100-ml beaker at 25°C, followed by dispersion; adding gradually ion exchanged water to the mixture with a burette; and measuring the amount of the ion exchanged water (ml) required for opaquing the mixture. The amount of the ion exchanged water (ml) is defined as a water tolerance value.

In addition, the block isocyanate can be obtained by adding a block agent having an active hydrogen to polyisocyanate such as trimethylene diisocyanate, hexamethylene diisocyanate, xylylene diisocyanate, or isophorone diisocyanate. The block isocyanate generates an isocyanate group resulting from dissociation of the block agent by heat, and the isocyanate group reacts with a functional group in the resin component, thereby resulting in cure.
When those curing agents are contained in the aqueous coating composition of the present invention, the content is preferably 20 to 100 parts by mass with respect to 100 parts by mass of the solid content of the resins in the aqueous coating composition from the viewpoint of curability.

The aqueous coating composition of the present invention may further include a polyether polyol. The polyether polyol has 0.02 or more, more preferably 0.04 or more, and still more preferably 1 or more primary hydroxy group in one molecule in average. When the number of the primary hydroxy group is less than 0.02, various properties of the coated film to be obtained are impaired. In addition, the polyether polyol may have secondary and tertiary hydroxy groups other than the primary hydroxy group. From the viewpoint of various properties of the coated film to be obtained, the total number of hydroxy groups including secondary and tertiary hydroxy groups is preferably 3 or more in one molecule. In addition, the hydroxy value of the polyether polyol is preferably 30 to 700 and more preferably 50 to 500. When the hydroxy value is out of this range, there are possibilities that the storage stability of the coating is impaired and various properties of the coated film to be obtained are impaired.

The polyether polyol has a number average molecular weight of 300 to 3,000, and more preferably 400 to 2,000. When the number average molecular weight is less than 300, which is out of the range, various properties of the coated film to be obtained are impaired. Note that the number average molecular weight can be determined by GPC (gel permeation chromatography) with polystyrene as a standard.

As the polyether polyol, specifically, compounds obtained by adding an alkylene oxide to an active hydrogen atom-containing compound are exemplified. Examples of the active hydrogen atom-containing compound include polyvalent alcohols, polyvalent phenols, and polyvalent carboxylic acids such as: water; 1-valent alcohols such as methanol, ethanol, propanol, and butanol; 2-valent alcohols such as ethylene glycol, propylene glycol, butylene glycol, and 1,6-hexanediol; 3-valent alcohols such as glycerin, trimethylol ethane, trimethylol propane, triethanolamine, and triisopropanol amine; 4-valent alcohols such as diglycerin, sorbitan, and pentaerythritol; 5-valent alcohols such as adonitol, arabitol, xylitol, and triglycerin; 6-valent alcohols such as dipentaerythritol, sorbitol, mannitol, iditol, inositol, dulcitol, talose, and allose; 8-valent alcohol such as sucrose; and polyvalent alcohol such as polyglycerin, polyvalent phenols such as pyrrogallol, hydroquinone, and phloroglucin, polyvalent phenols of bisphenols such as bisphenol A and bisphenol sulfones; and polyvalent carboxylic acid components and mixtures of two or more kinds of them.

Specific examples of the alkylene oxide include alkylene oxides such as ethylene oxide, propylene oxide, and butylene oxide. Two or more kinds thereof may be used in combination. When two or more kinds of them are used in combination, the form of addition may be either by block or random addition.

When the aqueous coating composition of the present invention includes the polyether polyol, the content is preferably 1 to 40 mass%, and more preferably 3 to 30 mass% in the solid content of the coating resin. When the content is less than 1 mass%, the external appearance of the coated film to be obtained may be impaired. When the content exceeds 40 mass%, various properties of the coated film to be obtained may be impaired.

The aqueous coating composition of the present invention may further include coloring components. As the coloring components, coloring pigments and flake pigments are exemplified. Examples of the coloring pigments include organic-based pigments such as azochelate-based pigments, insoluble azo-based pigments, condensed azo-based pigments, phthalocyanine-based pigments, indigo pigments, perinone-based pigments, perylene-based pigments, dioxane-based pigments, quinacridone-based pigments, isoindolinone-based pigments, and metal complex pigments, and inorganic-based pigments such as chrome yellow, yellow iron oxide, red iron oxide, carbon black, and titanium dioxide. The coloring components are contained in an amount of preferably 0.003 to 18.0 mass%, more preferably 0.01 to 15.0 mass%, and still more preferably 0.01 to 13.0 mass%.

In the aqueous coating composition of the present invention, additives usually added in the coating other than the above-mentioned components such as surface adjusting agents, thickeners, oxidation inhibitors, UV inhibitors, or antifoaming agents may be mixed. The mixing amount is in a range known by persons skilled in the art. In addition, the production method for the aqueous coating composition of the present invention is not particularly limited, and all methods which persons skilled in the art know, such as a method including kneading the mixture such as pigments with a kneader or a roll and the like, and dispersing the mixture by a sand grind mil or a disperser and the like, can be used.

The aqueous coating composition of the present invention may be coated by any one of methods for forming a single-layer coated film and multilayer coated film. The method of forming a multilayer coated film includes: coating the aqueous coating composition of the present invention on a substance to be coated on which an electrodeposition film and an intermediate coated film are formed as required; coating a clear coating thereon; and thereafter curing the resultant by heat to form a multilayer coated film.

The substance to be coated can be applied to various substrates, for example, metal molded products, plastic molded products, or foam, and is preferably applied to metal molded products capable of being subjected to cation electrodeposition coating. Examples of the metal molded product include plated and molded products made of iron, copper, aluminum, tin, zinc, and the like, alloys including those metals. Specific examples thereof include bodies and parts of automobiles such as cars, trucks, motorcycles, and buses. Those metals are preferably chemically-converted with a phosphate, a chromate, or the like in advance. In addition, the electrodeposition film may be formed on the metal molded product subjected to chemical conversion. As the electrodeposition paint, a cation type and anion type coating may be used, and a cation type electrodeposition paint is preferred from the viewpoint of anticorrosion properties.

Examples of the plastic molded product include plates or molded products formed of polypropylene resin, polycarbonate resin, urethane resin, polyester resin, polystyrene resin, ABS resin, vinylchloride resin, or polyamide resin. Specific examples thereof include automobile parts such as spoilers, bumpers, mirror covers, grilles, and door handles. Further, the plastic molded product is preferably subjected to vapor washing with trichloroethane or washed with a neutral detergent. In addition, the plastic molded product may be subjected to a primer coating in order to make an electrostatic coating possible.

An intermediate coated film may be further formed on the substrate as required. An intermediate coating is used for forming the intermediate coated film. The intermediate coating includes a coated film-forming resin, a curing agent, various organic-based or inorganic-based coloring components, and an extender pigment. The coated film-forming resins and curing agents are not particularly limited. Specific examples thereof include the coated film-forming resins and curing agents described in the above section about the aqueous coating composition, and those substances are used in combination. From the viewpoint of the various properties of the obtained intermediate coated film and the cost, an acrylic resin and/or a polyester resin, and an amino resin and/or an isocyanate are used in combination.

The coloring component contained in the intermediate coating, the components described above may be used. In general, gray-based intermediate coatings mainly formed of carbon black and titanium dioxide, set gray coatings the hue of which is adjusted with the finish coating, and so-called color intermediate coatings in which various coloring components are combined are preferably used. Further, flat pigments such as aluminum powders and mica powders may be added thereto. In those intermediate coatings, additives generally added in the coating other than the above components, such as surface adjusting agents, oxidation inhibitors, and antifoaming agents, may be mixed in.

In addition, the clear coating used in the method of forming the multilayer coated film is not particularly limited, and a clear coating containing coated film-forming resins and curing agents may be used. Further, coloring components may be incorporated in the clear coating to such a extent that the design properties of the ground is not impaired. Examples of the type of clear coating include a solvent type, a water based type, and a powder type.

Preferable examples of the solvent type clear coating include combinations of acrylic resins and/or polyester resins, and amino resins and/or isocyanates, and acrylic resins having carboxylic acids and epoxy curing system and/or polyester resins from the viewpoint of transparency or acid-resistant etching property.

In addition, as the water based type clear coating, coatings containing resins obtained by neutralizing with base the coated film-forming resins incorporated in the coatings exemplified as the solvent type clear coating to make water based resins can be exemplified. The resins can be neutralized by adding a tertiary amine such as dimethylethanol amine or triethyl amine before or after the polymerization.

On the other hand, as the powder type clear coating, generally-used powder coatings such as a thermoplastic powder coating and thermosetting powder coating may be used. The thermosetting powder coating is preferred because a coated film having favorable physical properties can be obtained. Specific examples of the thermosetting powder coating include powder clear coatings such as epoxy-based, acrylic, and polyester-based powder clear coatings. The acrylic powder clear coating having favorable weather resistance is particularly preferred.

Further, the clear coating preferably includes viscosity-controlling agents in order to secure the coating workability. As the viscosity-controlling agents, agents exhibiting thixotropic property may be generally used. In addition, curing catalysts, surface adjusting agents, or the like may be contained as required.

In the method of forming a multilayer coated film, the thickness of the coated film upon the coating with the aqueous coating composition of the present invention varies depending on the desired use, but in general, is preferably 10 to 30 pm in a dry film thickness. When the dry film thickness is less than 10 µm, the film is broken because the ground coat can not be masked. When the dry film thickness exceeds 30 µm, sharpness maybe impaired and defects such as unevenness or sagging upon the coating may occur.

The method of forming a multilayer coated film may include: baking the base coated film obtained by coating the aqueous base coating; and thereafter, coating the clear coating thereon. However, by further coating the clear coating on the uncured base coated film to form a clear coated film, baking and drying processes of the base coated film can be omitted, which are preferred in view of economic efficiency and environmental impact. Note that it is preferred to heat the uncured base coated film at 40 to 100°C for 2 to 10 minutes before the coat of the clear coating in order to obtain a favorable finished coated film. In addition, the clear coated film coated after the forming of the base coated film smoothes irregularities and light reflection caused by the base coated film, protects the base coated film, and imparts beauty thereto. Themethod of coating the clear coating on the base coated film specifically includes coating methods with a rotary atomizing type electrostatic coating machine called micromicro bell or micro bell.

The dry film thickness of the clear coated film formed by coating the clear coating is generally preferably about 10 to 80 µm, and more preferably about 20 to 60 pm. When the dry film thickness is less than 10 µm, irregularities of the ground coat can not be masked. When the dry film thickness exceeds 80 µm, defects such as generation of bulging or blow-holes and sagging may occur when the clear coating is coated.

It is preferred to form a coated film of the thus formed clear coated film by baking with the uncured base coated film described above, a so-called two-coat one-bake. The baking temperature is set to preferably 80 to 180°C and more preferably 120 to 160°C in view of the crosslink density and physical properties of the obtained multilayer coated film. The baking period can be set arbitrarily depending on the baking temperature, but it is appropriate to bake the coated film at a baking temperature of 120 to 160 °C for a baking period of 10 to 30 minutes.

The film thickness of the multilayer coated film formed by the method of forming a multilayer coated film is generally 30 to 300 µm and preferably 50 to 250 µm. When the film thickness is less than 30 µm, the strength of the film itself is decreased. When the film thickness exceeds 300 µm, the physical properties of the film such as a thermal cycle may be impaired.

### Examples

Hereinafter, the present invention is detailed by way of examples. Note that "%" and "ppm" described in the examples below are based on mass unless otherwise specified.

### <Urethane compound: component (A)>

### Production example 1

In a glass reactor equipped with a nitrogen-introducing tube, a temperature gauge, and a stirrer, 1 mol of 2-hexyldecanol (1-valent branched alcohol having 16 carbon atoms) and 0.5 mol of polyethylene glycol having a molecular weight of 6,000 were loaded. The pressure was reduced to 10 hPa or less, and the system was dehydrated at 90 to 100° C for 3 hours, whereby the moisture content of the system was set to 0.03% or less. Next, the pressure of the system was recovered to normal pressure with nitrogen, then the system was cooled to 80°C, and 1 mol of hydrogenated diphenylmethane diisocyanate was added thereto. After the resultant mixture was reacted at 80 to 90° C for 2 hours under a nitrogen stream, the content of isocyanate was confirmed to be 0%. As a result, Compound A-1 being a pale yellow solid compound at normal temperature was obtained.

### Compounds A-2 to A-9

Compounds A-2 to A-9 were produced by using the same reaction device and method as in Production example 1. All the produced compounds are described in Table 1.

**[Table 1]**

| | 1-valent alcohol | Polyether polyol | Isocyanate compound |
|---|---|---|---|
| A-1 | iC16 alcohol (1) | PEG6000 (0.5) | HMDI (1) |
| A-2 | iC20 alcohol (1) | PEG11000 (0.5) | HMDI (1) |
| A-3 | nC24 alcohol (1) | PEG11000 (0.5) | HDI (1) |
| A-4 | iC20 alcohol (1) | PEG6000 (0.7) | HMDI (1.7) |
| A-5 | iC20 alcohol (1) | G11000 (0.33) | HMDI (1) |
| A-6 | iC20 alcohol (1) | F-68 (0.5) | HMDI (1) |
| A-7 | iC16 alcohol 10EO(1) | PEG6000 (0.5) | HMDI (1) |
| A-8 | iC20 alcohol 20EO(1) | PEG11000 (0.5) | HMDI (1) |
| A-9 | iC16 alcohol 50EO(1) | PEG20000 (0.5) | HDI (1) |

| | | | |
|---|---|---|---|
| * The numbers in parentheses are the number of moles of respective compounds used in the reaction. | | | |

iC16 alcohol (1): branched alcohol having 16 carbon atoms(2-hexyl decanol)
iC20 alcohol (1): branched alcohol having 20 carbon atoms (2-octyldodecyl alcohol)
nC24 alcohol (1): linear alcohol having 24 carbon atoms (tetracosyl alcohol)
iC16 alcohol 10EO: 10-mol ethylene oxide adduct of branched alcohol having 16 carbon atoms (2-hexyldecanol)
iC20 alcohol 20EO: 20-mol ethylene oxide adduct of branched alcohol having 20 carbon atoms (2-octyldodecyl alcohol)
iC16 alcohol 50EO: 50-mol ethylene oxide adduct of branched alcohol having 16 carbon atoms (2-hexyl decanol)
PEG6000: polyethylene glycol (molecular weight of 6,000: average polymerization degree of 136)
PEG11000: polyethylene glycol (molecular weight of 11,000: average polymerization degree of 250)
PEG20000: polyethylene glycol (molecular weight of 20,000: average polymerization degree of 454)
G11000: ethylene oxide adduct of glycerin (molecular weight of 11,000: average polymerization degree of 248)
F-68: Pluronic type surfactant (polyoxyethylene (160) polyoxypropylene (30) glycol, ethylene oxide content of 80 mass%, weight average molecular weight of 8,780)
HMDI: hydrogenated diphenylmethane diisocyanate (dicyclohexylmethane diisocyanate)
HDI: hexamethylene diisocyanate

### <Flake pigment: component (B)>

B-1: aluminum pigment paste (manufactured by Asahi Kasei Corporation.; Aluminum paste MH8801)
B-2: aluminum oxide (100% product)
B-3: aluminum pigment paste (manufactured by Nihonboshitsu Co., Ltd.; ASTROSHINE T-8990)

### <Water-soluble resin: component (C)>

C-1 (emulsion resin)
Composition (mass ratio)
An emulsion resin obtained by being subjected to emulsion polymerization of methyl acrylate, ethyl acrylate, 2-hydroxyethyl acrylate, styrene, acrylamide, and methacrylic acid (at a ratio of 18.5, 56.2, 8.3, 10, 4, and 3, respectively).

### <Physical properties>

Solid content of 24%, acid value of solid content of 20 mgKOH/g, hydroxy value of 40 mgKOH/g, and acrylate content of 83%

### C-2 (Emulsion resin)

### Composition (mass ratio)

An emulsion resin obtained by being subjected to emulsion polymerization of methyl acrylate, ethyl acrylate, 2-hydroxyethyl acrylate, styrene, acrylamide, and methacrylic acid (at a ratio of 18.5, 26.2, 8.3, 25, 19, and 3, respectively).
Solid content of 24%, acid value of solid content of 20 mgKOH/g, hydroxy value of 40 mgKOH/g, and acrylate content of 53%

### C-3 (Water-soluble resin)

### Composition (mass ratio)

An aqueous resin obtained by neutralizing 100 parts of resin formed of isophthalic acid, phthalic anhydride, trimethylol propane, neopentyl glycol, and hexahydrophthalic acid (at a ratio of 21.4, 19.2, 16.1, 31.6, and 11.7, respectively) with 8.6 parts of dimethylethanol amine.
Solid content of 50%, acid value of solid content of 50 mgKOH/g, hydroxy value 65 mgKOH/g, and weight average molecular weight of 10,000

### <Phosphorous atom-containing component: component (D)> D-1: phosphorous atom-containing acrylic resin

Acid phosphooxyhexa(oxypropylene)monomethacrylate, 2-ethylhexyl acrylate, 2-hydroxyethyl methacrylate, lauryl methacrylate, styrene, methacrylic acid (at a ratio of 30, 24.6, 14, 15, 8.8, and 7.6, respectively), solid content of 50%, acid value of solid content of 61 mgKOH/g, hydroxy value of 60 mgKOH/g, and weight average molecular weight of 5,000
D-2: phosphate
Monolauryl phosphate

<other resin>

### E-1: butyl etherified melamine resin (manufactured by Mitsui Toatsu Corporation.: U-VAN 28-60)

Aqueous coating compositions containing component (A) in Table 1 using the mixing amount in Table 2 and Table 3 were prepared using the test sample. The obtained aqueous coating compositions were adjusted to have a solid content of 20% by adding ion exchanged water. The resultant aqueous coating compositions were coated on steel sheet for automotive outer panels to have a film thickness of 20 µm by air spraying. Subsequently, a commercially available clearcoat coating was coated thereon to have a film thickness of 30 µm, and the resultant was cured by heat at 140° C for 30 minutes. Note that the steel sheet for automotive outer panels used was subjected to a cation electrodeposition coating and intermediate coating in advance.

**[Table 2]**

| | Ex 1 | Ex 2 | Ex 3 | Ex 4 | Ex 5 | Ex 6 | Ex 7 | Ex 8 | Ex 9 | Ex 10 |
|---|---|---|---|---|---|---|---|---|---|---|
| A-1 | 1 | 1 | 1 | | | | | | 1 | |
| A-2 | | | | 1 | | | | | | 1 |
| A-3 | | | | | 1 | | | | | |
| A-4 | | | | | | 1 | | | | |
| A-5 | | | | | | | 1 | | | |
| A-6 | | | | | | | | 1 | | |
| A-7 | | | | | | | | | | |
| A-8 | | | | | | | | | | |
| A-9 | | | | | | | | | | |
| B-1 | 200 | | | 200 | 200 | 200 | 200 | 200 | 200 | |
| B-2 | | 200 | | | | | | | | |
| B-3 | | | 100 | | | | | | | 100 |
| C-1 | 20 | 20 | 20 | 20 | 20 | 20 | 20 | 20 | 20 | 20 |
| D-1 | | | | | | | | | 1 | |
| D-2 | | | | | | | | | | 1 |
| E-1 | 20 | 20 | 20 | 20 | 20 | 20 | 20 | 20 | 20 | 20 |

**[Table 3]**

| | Comp.Ex 1 | Comp.Ex 2 | Comp.Ex 3 | Comp.Ex 4 | Comp.Ex 5 | Comp.Ex 6 | Comp.Ex 7 | Comp.Ex 8 |
|---|---|---|---|---|---|---|---|---|
| A-1 | | | | | | | | |
| A-2 | | | | | | | | |
| A-3 | | | | | | | | |
| A-4 | | | | | | | | |
| A-5 | | | | | | | | |
| A-6 | | | | | | | | |
| A-7 | 1 | 1 | 1 | | | 1 | | 3 |
| A-8 | | | | 1 | | | 1 | |
| A-9 | | | | | 1 | | | |
| B-1 | 200 | | | 200 | 200 | 200 | | 200 |
| B-2 | | 200 | | | | | | |
| B-3 | | | 100 | | | | 100 | |
| C-1 | 20 | 20 | 20 | 20 | 20 | 20 | 20 | 20 |
| D-1 | | | | | | 1 | | |
| D-2 | | | | | | | 1 | |
| E-1 | 20 | 20 | 20 | 20 | 20 | 20 | 20 | 20 |

The viscosity coefficient and viscosity of the coatings prepared with the mixing amounts in Table 1 to Table 3 were measured, and thereafter the sagging of the coatings after coat and metallic feeling of the coat (gloss feeling, brightness) were visually evaluated by 10 panelists based on the following criteria. The averages of the evaluated points were calculated. Note that the viscosity coefficient was measured at 60 rpm and at 6 rpm with a B type viscometer. The viscosity is represented by values calculated by dividing the viscosity coefficient at 6 rpm by that at 60 rpm. The higher the value is, the higher the thixotropic property of the coating is. The results are shown in Table 4.

### Evaluation for sagging

1: there is no sagging
2: there is slight sagging but no problem is found in appearance 3: there is a little sagging, which may be a problem in appearance 4: there is sagging, which is a problem in appearance

### Evaluation for metallic feeling

1: there is uniform gloss
2: there is a slight unevenness in gloss, which causes no problem practically
3 : there is a slight unevenness, which may cause problems practically
4: there is unevenness in gloss, which causes a problem practically

**[Table 4]**

| | Viscosity coefficient mPa·s) | | Viscosity (viscosity ratio) | Sagging | Metallic feeling |
|---|---|---|---|---|---|
| | 60 rpm | 6 rpm | | | |
| Ex 1 | 16,000 | 100,000 | 6.25 | 1.0 | 1.2 |
| Ex 2 | 15,000 | 94,000 | 6.27 | 1.2 | 1.6 |
| Ex 3 | 12,000 | 75,000 | 6.25 | 1.0 | 1.2 |
| Ex 4 | 25,000 | 170,000 | 6.80 | 1.0 | 1.2 |
| Ex 5 | 13,000 | 80,600 | 6.20 | 1.2 | 1.3 |
| Ex 6 | 22,000 | 148,000 | 6.73 | 1.0 | 1.2 |
| Ex 7 | 21,000 | 124,000 | 5.90 | 1.5 | 1.6 |
| Ex 8 | 11,000 | 63,000 | 5.73 | 1.5 | 1.5 |
| Ex 9 | 17,000 | 110,000 | 6.47 | 1.0 | 1.0 |
| Ex 10 | 25,000 | 170,000 | 6.80 | 1.0 | 1.0 |
| Comp.Ex 1 | 4,400 | 18,000 | 4.09 | 2.6 | 2.4 |
| Comp.Ex 2 | 4,300 | 17,000 | 3.95 | 3.1 | 3.3 |
| Comp.Ex 3 | 3,900 | 16,000 | 4.10 | 2.4 | 2.7 |
| Comp.Ex 4 | 5,500 | 24,000 | 4.36 | 2.7 | 2.6 |
| Comp.Ex 5 | 4,200 | 16,400 | 3.90 | 2.9 | 2.8 |
| Comp.Ex 6 | 4,500 | 19,000 | 4.22 | 2.6 | 2.2 |
| Comp.Ex 7 | 4,400 | 18,000 | 4.09 | 2.4 | 2.4 |
| Comp.Ex 8 | 11,500 | 46,000 | 4.00 | 1.5 | 2.4 |

From the above results, it is found that the aqueous coating composition of the present invention has sufficient thixotropic properties and exhibits excellent design properties.

### Industrial Applicability

The present invention is suitable for an aqueous coating composition to be coated on an automobile body and the like, and particularly, to an aqueous coating composition having a viscosity suitable for spray coating and excellent design properties of a coated film obtained by a metallic coat.

## Claims

1. An aqueous coating composition, comprising:
a urethane compound as component (A) represented by the following general formula (1); 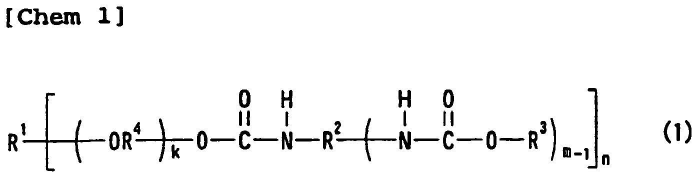
where: R¹ represents a residue obtained by removing hydroxy groups from an n-valent alcohol having 2 to 20 carbon atoms; R² represents a hydrocarbon group which may have a urethane bond; R³ represents an alkyl group having 8 to 30 carbon atoms; R⁴ represents an alkylene group having 2 to 3 carbon atoms; k represents an integer of 1 to 500; and n and m each represent an integer of 2 to 10;
a flake pigment as component (B); and
a water-soluble resin other than component (A) as component (C).

2. An aqueous coating composition according to claim 1, further comprising a phosphorus atom-containing compound as component (D).

3. An aqueous coating composition according to claim 1 or 2, wherein R¹ in the general formula (1) represents a hydrocarbon group having 2 to 18 carbon atoms.

4. An aqueous coating composition according to claim 1 or 2, wherein R¹ represents an ethylene group, R⁴ represents an ethylene group, and n represents a number of 2 in the general formula (1).

5. An aqueous coating composition according to any one of claims 1 to 4, wherein the flake pigment of component (B) is aluminum or an aluminum-containing compound.

6. An aqueous coating composition according to any one of claims 1 to 5, wherein component (C) is an aqueous acryl emulsion using 60 mass% or more of (meth)acrylate as a raw material monomer.

7. An aqueous coating composition according to any one of claims 1 to 6, wherein component (C) is an aqueous resin in which a resin having an acid value of 10 to 100, a hydroxy value of 30 to 200, and a weight average molecular weight of 4,000 to 2,000,000 is dissolved or dispersed in an aqueous medium with a neutralizing base.

## Patentansprüche

1. Wässrige Beschichtungszusammensetzung, umfassend:
eine Urethanverbindung als Komponente (A), dargestellt durch die folgende allgemeine Formel (1): 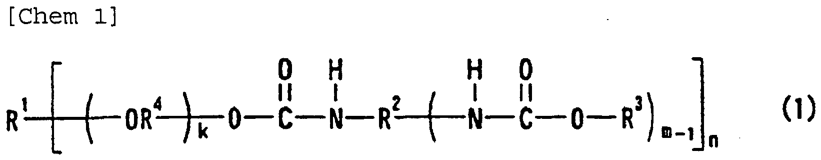 worin R¹ ein Rest ist, erhalten durch Entfernen von Hydroxygruppen von einem n-valenten Alkohol mit 2 bis 20 Kohlenstoffatomen; R² eine Kohlenwasserstoffgruppe ist, die eine Urethanbindung haben kann, R³ eine Alkylgruppe mit 8 bis 30 Kohlenstoffatomen ist, R⁴ eine Alkylengruppe mit 2 bis 3 Kohlenstoffatomen ist, k eine ganze Zahl von 1 bis 500 ist und n und m jeweils eine ganze Zahl von 2 bis 10 sind;
ein Schüppchenpigment als Komponente (B); und
ein anderes wasserlösliches Harz als die Komponente (A) als Komponente (C).

2. Wässrige Beschichtungszusammensetzung nach Anspruch 1, weiterhin umfassend eine Phosphoratom-haltige Verbindung als Komponente (D).

3. Wässrige Beschichtungszusammensetzung nach Anspruch 1 oder 2, worin R¹ in der allgemeinen Formel (1) eine Kohlenwasserstoffgruppe mit 2 bis 18 Kohlenstoffatomen ist.

4. Wässrige Beschichtungszusammensetzung nach Anspruch 1 oder 2, worin R¹ eine Ethylengruppe ist, R⁴ eine Ethylengruppe ist und n eine Zahl von 2 in der allgemeinen Formel (1) ist.

5. Wässrige Beschichtungszusammensetzung nach einem der Ansprüche 1 bis 4, worin das Schüppchenpigment der Komponente (B) Aluminium oder eine Aluminium-haltige Verbindung ist.

6. Wässrige Beschichtungszusammensetzung nach einem der Ansprüche 1 bis 5, worin die Komponente (C) eine wässrige Acrylemulsion unter Verwendung von 60 Massen-% oder mehr (Meth)acrylat als Ausgangsmaterialmonomer ist.

7. Wässrige Beschichtungszusammensetzung nach einem der Ansprüche 1 bis 6, worin die Komponente (C) ein wässriges Harz ist, worin ein Harz mit einem Säurewert von 10 bis 100, einem Hydroxywert von 30 bis 200 und einem Molekulargewicht im Gewichtsmittel von 4.000 bis 2.000.000 in einem wässrigen Medium mit einer neutralisierenden Base aufgelöst oder dispergiert ist.

## Revendications

1. Composition de revêtement aqueuse, comprenant :
un composé d'uréthanne à titre de composant (A) représenté par la formule générale (1) suivante : 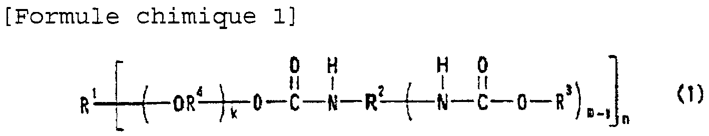 dans laquelle : R¹ représente un résidu obtenu par élimination des groupes hydroxy d'un alcool n-valent ayant de 2 à 20 atomes de carbone ; R² représente un groupe hydrocarbure qui peut contenir une liaison uréthanne ; R³ représente un groupe alkyle ayant de 8 à 30 atomes de carbone ; R⁴ représente un groupe alkylène ayant de 2 à 3 atomes de carbone ; k représente un entier de 1 à 500 ; et n et m représentent chacun un entier de 2 à 10 ;
un pigment en paillettes à titre de composant (B) ; et
une résine soluble dans l'eau autre que le composant (A) à titre de composant (C).

2. Composition de revêtement aqueuse selon la revendication 1 comprenant en outre un composé contenant un atome de phosphore à titre de composant (D) .

3. Composition de revêtement aqueuse selon la revendication 1 ou 2, dans laquelle R¹ dans la formule générale (1) représente un groupe hydrocarbure ayant de 2 à 18 atomes de carbone.

4. Composition de revêtement aqueuse selon la revendication 1 ou 2, dans laquelle R¹ représente un groupe éthylène, R⁴ représente un groupe éthylène, et n représente un nombre de 2 dans la formule générale (1).

5. Composition de revêtement aqueuse selon l'une quelconque des revendications 1 à 4, dans laquelle le pigment en paillettes du composant (B) est l'aluminium ou un composé contenant de l'aluminium.

6. Composition de revêtement aqueuse selon l'une quelconque des revendications 1 à 5, dans laquelle le composant (C) est une émulsion acrylique aqueuse contenant 60 % en masse ou plus de (méth)acrylate à titre de monomère de départ.

7. Composition de revêtement aqueuse selon l'une quelconque des revendications 1 à 6, dans laquelle le composant (C) est une résine aqueuse dans laquelle une résine ayant un indice d'acide de 10 à 100, un indice d'hydroxy de 30 à 200, et un poids moléculaire moyen en poids de 4000 à 2 000 000 est dissoute ou dispersée dans un milieu aqueux avec une base neutralisante.
